# EUROPEAN PATENT APPLICATION

(11) **EP 1 009 130 A1**
(43) Date of publication of application: **14.06.2000**
(21) Application number: 98480089.6
(22) Date of filing: 11.12.1998
(51) Int. Cl.: H04L 12/56

(54) **Distributed directory services for locating network resources in a very large packet switching network**

(71) Applicant: INTERNATIONAL BUSINESS MACHINES CORPORATION, Armonk, NY 10504 (US)
(72) Inventor: Brun, Gérard, 06100 Nice (FR); Chobert, Jean-Paul, 06640 St. Jeannet (FR); Boudeile, Guy, 06800 Cagnes / Mer (FR); Fichou, Aline, 06480 la Colle sur Loup (FR); Galand, Claude, 06480 La Colle sur Loup (FR)
(74) Representative: Etorre, Yves Nicolas

(57) **Abstract**

The present invention relates to a method and system of locating a network resource in a packet switching network divided in a backbone subnetwork connected to one or a plurality of access subnetworks. The access subnetworks comprise one or a plurality of access border nodes directly connected to the backbone subnetwork. The backbone subnetwork comprises one or a plurality of backbone border nodes directly connected to the access subnetworks. Border nodes of different subnetworks are connected by border links.

The method in access border nodes involves the steps of :
- receiving a query message comprising a resource name, the resource name including a prefix;
- comparing the resource name prefix with the prefixes stored in an access border node directory database, said access border node directory database comprising prefixes of the resources local to the access border node subnetwork;
- determining whether the resource name relates to a resource which is local to the access border node subnetwork or not;
- forwarding said query message to an adjacent backbone border node when the resource name relates to a resource which is not local to the access border node subnetwork.

The method in backbone border nodes involves the steps of :
- receiving a query message comprising a resource name, the resource name including a prefix;
- comparing the resource name prefix with the prefixes stored in one or a plurality of backbone border node directory databases. Each backbone border node directory database corresponds to an access subnetwork managed by the backbone border node;
- determining whether the resource name relates to a resource which belongs to an access subnetwork that the backbone border node manages or not;
- forwarding the query message to an adjacent access border node when the resource name relates to a resource which belongs to an access border node subnetwork managed by the backbone border.

Each access subnetwork has its own spanning tree and distributed topology, and interactions between access networks are limited to a minimum. The size of distributed topologies is kept small and the control traffic is mostly limited to subnetworks.

## Description

### Technical field of the invention

The present invention relates to very large a packet switching networks, and more particularly to a method and system for creating and maintaining distributed directory services in a network comprising a backbone network connected to one or a plurality of access networks.

### Background art

### HIGH SPEED PACKET SWITCHING NETWORKS

Data transmission is now evolving with a specific focus on applications and by integrating a fundamental shift in the customer traffic profile. Driven by the growth of workstations, the local area networks interconnection, the distributed processing between workstations and super computers, the new applications and the integration of various and often conflicting structures - hierarchical versus peer to peer, wide versus local area networks, voice versus data - the data profile has become more bandwidth consuming, bursting, non-deterministic and requires more connectivity. Based on the above, there is strong requirement for supporting distributed computing applications across high speed networks that can carry local area network communications, voice, video and traffic among channel attached hosts, business, engineering workstations, terminals, and small to intermediate file servers. This vision of a high speed multi-protocol network is the driver for the emergence of fast packet switching networks architectures in which data, voice, and video information is digitally encoded, chopped into small packets and transmitted through a common set of nodes and links. An efficient transport of mixed traffic streams on very high speed lines means for these new network architecture a set of requirements in term of performance and resource consumption which can be summarized as follows:
- a very high throughput and a very short packet processing time,
- a very large flexibility to support a wide range of connectivity options,
- an efficient flow and congestion control.

### Throughput and Processing Time

One of the key requirement of high speed packet switching networks is to reduce the end to end delay in order to satisfy real-time delivery constraints and to achieve the necessary high nodal throughput for the transport of voice and video. Increases in link speeds have not been matched by proportionate increases in the processing speeds of communication nodes and the fundamental challenge for high speed networks is to minimize the processing time and to take full advantage of the high speed/low error rate technologies, most of the transport and control functions provided by the new high bandwidth network architectures are performed on an end to end basis. The flow control and particularly the path selection and bandwidth management processes are managed by the access points of the network which reduces both the awareness and the function of the intermediate nodes.

### Connectivity

In high speed networks, the nodes must provide a total connectivity. This includes attachment of the user's devices, regardless of vendor or protocol, and the ability to have the end user communicated with any other device. The network must support any type of traffic including data, voice, video, fax, graphic or image. Nodes must be able to take advantage of all common carrier facilities and to be adaptable to a plurality of protocols. All needed conversions must be automatic and transparent to the end user.

### Congestion and Flow Control

Communication networks have at their disposal limited resources to ensure an efficient packets transmission. An efficient bandwidth management is essential to take full advantage of a high speed network. While transmission costs per byte continue to drop year after year, transmission costs are likely to continue to represent the major expense of operating future telecommunication networks as the demand for bandwidth increases. Thus considerable efforts have been spent on designing flow and congestion control processes, bandwidth reservation mechanisms, routing algorithms to manage the network bandwidth. An ideal network should be able to transmit an useful traffic directly proportional to the traffic offered to the network and this as far as the maximum transmission capacity is reached. Beyond this limit, the network should operate at its maximum capacity whatever the demand is.

### NETWORK CONTROL

The flow and congestion control operations generate additional traffic on the network. Ideally only the exact bandwidth needed at any time by a network connection should be dynamically reserved for that connection, and also only the exact bandwidth needed for the network control operations should be reserved for that purpose. However, it is essential for an efficient flow and congestion control to provide at any time enough network resources in terms of bandwidth or performance to the control traffic. The control traffic can be divided into two main families:
- a network signalling control traffic, and
- a network routing control traffic.

### Signalling Control Traffic

The signalling control traffic is used to establish point-to-point and point-to-multipoint network connections across the network. Signalling control messages are generally forwarded towards the different nodes along the path of the connections. The signalling control traffic includes:
- Connection set-up and connection takedown messages,
- Connections bandwidth refresh messages,
- Connections bandwidth adaptation (increase/decrease) messages,
- Directory queries in network (directed to a specific resource), ...

### Routing Control Traffic

The routing control traffic is used for distributing the network topology information between nodes of the network. This information is necessary mainly for the computation of routing paths between nodes in the network. Routing control messages are generally broadcasted to all nodes by means of Spanning Tree or flooding mechanisms. The routing control traffic includes:
- Control Point Spanning Tree maintenance messages,
- Topology update messages
- Directory searches in network (broadcast through the network), ...

### LARGE NETWORKS

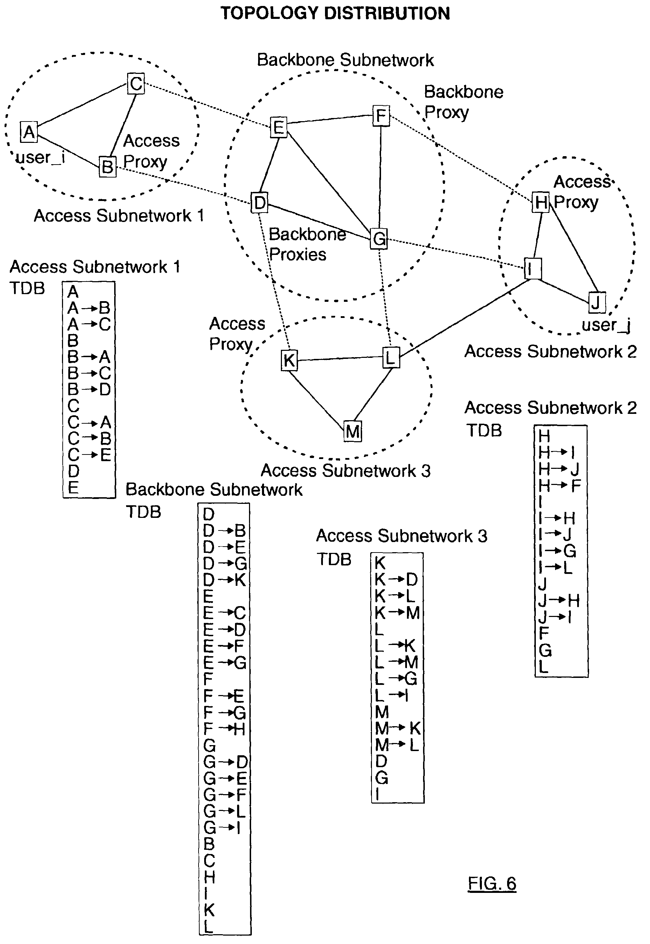

As shown in Figure 6, large networks suffer from the large amount of control traffic necessary to update the distributed network topologies in view of the high number of nodes and transmission links. Directory queries are also an important contributor to the control traffic load. The problem is particularly sensible on spanning tree links and on links issued from access nodes. For optimizing the resources, in particular the bandwidth where it is the more demanded, several solutions have been considered.

Most of the wide networks (large country, world-wide networks) are configured so that a backbone network can support the communications between different access networks. Such network topology allows good performances and the optimisation of the network administration. Generally, access networks are private networks and indeed they are very often confined to a local area such as a building or a campus. However, a private network can be distributed over a wide area by the use of carrier links between nodes. The backbone network is generally a public network but can also be part of a private network using lines leased from a carrier such as the PTT.

### Bandwidth Reservation for Control Traffic

Because of the high importance of network traffic, enough bandwidth on the links must be reserved to transmit the routing and signalling control messages. Insufficient resources for routing control messages could lead to invalid topology tables and a node, with an erroneous or obsolete view of the network topology, may take wrong routing decisions. Insufficient resources for the signalling control messages could also lead to errors or at least to a degradation of the quality of service in the establishment and management of network connections. US patent application no 771333 (EP patent application no 95480178.3, IBM's reference FR9 95 017) entitled "Dynamic Bandwidth Reservation for Control Traffic in High Speed Packet Switching Networks" discloses a method and system for reserving dynamically and in priority for each link of the network the exact amount of bandwidth necessary for the transmission of the network control traffic. An evaluation of the expected control traffic on each link of the network is performed in order to allocate a sufficient but minimum fraction of the link bandwidth and for allocating the maximum available bandwidth for the user traffic.

### Hierarchical Networks

Hierarchical networks have been proposed for a while, and such architectures are currently developed for example with PNNI (Private Network to Network Interface) for ATM (Asynchronous Transfer Mode) networks or NBBS (Networking BroadBand Services) for IBM (International Business Machine) networks.

### Private Network to Network Interface

The Private Network to Network Interface (PNNI) is described in in the ATM Forum specifications (PNNI 1.0 Specs March 1996), however a summary can be found in publication entitled "Asynchronous Transfer Mode Networks - Performance Issues", second edition Artech House 1995 (Raif O. Onvural) incorporated herewith by reference, PNNI is the demarcation point between two switching systems. In this context, a switching system may be :
- a single ATM switch. A PNNI is used between every pair of neighbour switches in the network. These switches may be built by different vendors. ATM end stations are attached to the network across UNIs (User to Network Interface).
- alternatively, a collection of two or more ATM switches managed and operated under one administration. The network may be built with switches from a single vendor. This would eliminate the disadvantages of operating at the level provided by the PNNI and allow it to take advantage of vendor specific network services and solutions toward utilizing network resources efficiently.

In the former case, the PNNI becomes a switch to switch interface, whereas in the later case, it is referred to as an network to network interface (NNI). PNNI includes the definitions of various physical interfaces, ATM layer, management interface, and signalling. The ATM Forum PNNI specifications includes both routing and signalling functions:
- PNNI routing comprises various "generic" network control functions, such as call admission, path selection, and topology distribution.
- PNNI signalling is used to carry PNNI routing related protocol information as well as perform call control functions for connection establishment, management and termination.

In PNNI routing, the switching system that a connection request originates from its UNI is responsible for finding the end to end path to the destination end station. This is referred to as "source routing". For each connection request, the source switching finds a path based on the advertised capabilities and the desirability of other switching systems to carry connections with different characteristics. After finding the path, the originating switching system uses PNNI signalling to request connection establishment from intermediate switching systems along the path. PNNI routing is based on link state routing. Each switching system advertises a set of parameters including information about the links attached to it, quality of service parameters it can guarantee, and its capability and desirability to carry particular types of connections. Assuming that each switching system sends a message advertising the status of resources it controls as soon as a change takes place (i.e., upon accepting or terminating a connection). This message will arrive at other switching systems (at the minimum) after the corresponding propagation delays. Accordingly, source switching can never have up to date information about the status of other switching systems. Increasing the frequency and the amount of information advertised may be thought to enable "better" paths to be chosen. Doing so would also result in significant cost in bandwidth and processing complexity. At the other extreme, if no information is advertised then the chances of choosing "poor paths would increase. The topology update mechanism in ATM networks needs to be designed with care. Otherwise, the cost of bandwidth and the processing complexity may not be justified when compared with the amount of network efficiency achieved.
The choice of what internal state information to advertise, how often, and to where require the specification of a multilevel hierarchical routing model. The PNNI hierarchical model is recursive and at each level of hierarchy, the topology is represented by logical nodes and logical links. At the lowest level of hierarchy, each node represents a real switching system or a group of switching system. At higher layers, each node may represent either a real system or a group of switching systems. Similarly, PNNI links may correspond to either a real physical link or a virtual link.
Nodes are collected into peer groups. All the nodes within a peer group exchange link information and obtain an identical topology database representing the peer group. Peers groups are organized into a hierarchy in which one or more peer groups are associated with a parent peer group. Parent peer groups are grouped into higher layer peer groups.
The operation of PNNI routing in a parent group attempts to collapse a child peer group into a single node. In this case, there would be different paths to cross a peer group, each with different characteristics. Hence, it is not always possible to advertise the true cost of the real physical paths. The representation of peer groups and their interconnections as logical nodes and logical links implies that information distributed at higher layers is summarized. This allows the routing to scale to very large networks. Its consequence is that somewhat imperfect paths may be selected.

To summarize, the PNNI routing uses the concept of abstraction. Nodes and links not pertaining to the local peer group do not appear as such but are factored in a topology summary. The summarized topology is built of a much smaller number of nodes and links. While the amount of control traffic is proportional to the topology size, the corresponding control traffic for distributing the topology is reduced accordingly. The drawback is the complexity and imperfection introduced by the hierarchy.

### Spanning Tree

The NBBS (Networking BroadBand Services) spanning tree function supports the routing control traffic by interconnecting once every node in the network by means of a logical tree. Each node on the spanning tree maintains a parent-child relationship with its adjacent node. At any one time, one of the nodes is the root of the spanning tree and this node coordinates the construction and maintenance of the tree. When the topology of the network changes because a node or link is activated or deactivated, a new root will be dynamically selected. Assuming an edge is a link that is part of the spanning tree, although every node in the network is in the spanning tree, only the minimum number of edges is used in order to connect the nodes. The main reason for using a spanning tree is that it allows information that has to go to every node to be sent very quickly and efficiently. Every node receives a single copy of every message (compared to many copies in the case of broadcast technology). However the spanning tree maintenance cannot cope easily very large network (several hundreds of nodes) or unstable networks which request frequent rearrangements or reconnections.

More details concerning NBBS and more particularly the NBBS spanning tree can be found in the following publications :
- "Networking BroadBand Services (NBBS), Architecture Tutorial", IBM International Technical Support Centers GG24-4486-00 June 1995.
- "Communication-Optimal Maintenance of Dynamic Trees" by Baruch Awerbuch et al, 1/25/90 research report.
- "Multicast Group Membership Management in High Speed Wide Area Networks" Auerbach et al, International Conference on Distributed Computing Systems, Arlington , Texas, May 20-24, 1991, Institute of Electrical and Electronics Engineers, pages 231 -238.
- IBM Technical Disclosure Bulletin "Distributed Tree Maintenance" by et Cidon al, Vol. 35 No. 1A, pages 93-98, June 1992, RA891044.
- European patent application 93480060.8 entitled "Multicast Communication Tree Creation and Control Method and Apparatus" Auerbach et al (priority date 18/06/92).

### Decomposition of Network Topology

In the real world , large transport networks are not fully meshed. Networks are usually built around a hierarchical structure. A set of nodes interconnected by high throughput links are used to build a "backbone" with a high degree of meshing to allow the redundancy and reliability required by the user. Then local nodes are grouped in geographical "subnetworks" themselves attached to the backbone. The control traffic can take advantage of the particular network topology to drastically reduce the network load. For a given connection, only a limited number of nodes are defined as eligible and are taken in account by the routing algorithm in the optimal route search.

US patent 5,495,479 (EP application number 93480105.1, IBM's reference FR 9 93 013 entitled "Method and Apparatus for an Automatic Decomposition of a Network Topology into a Backbone and Subareas" (C. Galand et al.) discloses a method and system for performing an automatic decomposition of a network into a backbone and subareas to speed up the path selection process without degrading the optimization criterion of the routing algorithm and without generating additional control messages on the network. The selection of a routing path in an access node involves the steps of storing the network configuration; automatically pre-selecting a set of usable links for each destination node located in the network; storing locally said pre-selection of usable links; determining, for each connection request between said access node and a destination node, a routing path among said pre-selected usable links.

### Objects of the invention

The object of the present invention is to locate a network resource in a very large network divided in multiple subnetworks.

It is a further object to limit in large networks the control traffic and in particular, topology update messages, control point spanning tree maintenance messages ...
it is another object not to overload the network with multiple directory queries.

It is a another object to limit the size of the network topology that a node can access to the subnetwork it belongs to.

It is another object to define a simple and effective method and system for locating a resource in large networks.

### Summary of the Invention

The present invention relates to a method and system of locating a network resource in a packet switching network divided in a backbone subnetwork connected to one or a plurality of access subnetworks. The access subnetworks comprise one or a plurality of access border nodes directly connected to the backbone subnetwork. The backbone subnetwork comprises one or a plurality of backbone border nodes directly connected to the access subnetworks. Border nodes of different subnetworks are connected by border links.

The method in access border nodes involves the steps of:
- receiving a query message comprising a resource name, the resource name including a prefix;
- comparing the resource name prefix with the prefixes stored in an access border node directory database, said access border node directory database comprising prefixes of the resources local to the access border node subnetwork;
- determining whether the resource name relates to a resource which is local to the access border node subnetwork or not;
- forwarding said query message to an adjacent backbone border node when the resource name relates to a resource which is not local to the access border node subnetwork.

The method in backbone border nodes involves the steps of:
- receiving a query message comprising a resource name, the resource name including a prefix;
- comparing the resource name prefix with the prefixes stored in one or a plurality of backbone border node directory databases. Each backbone border node directory database corresponds to an access subnetwork managed by the backbone border node;
- determining whether the resource name relates to a resource which belongs to an access subnetwork that the backbone border node manages or not;
- forwarding the query message to an adjacent access border node when the resource name relates to a resource which belongs to an access border node subnetwork managed by the backbone border.

Each access subnetwork has its own spanning tree and distributed topology, and interactions between access networks are limited to a minimum. The size of distributed topologies is kept small and the control traffic is mostly limited to sub networks.

### Drawings

The novel and inventive features believed characteristics of the invention are set forth in the appended claims. The invention itself, however, as well as a preferred mode of use, further objects and advantages thereof will best be understood by reference to the following detailed description of an illustrative detailed embodiment when read in conjunction with the accompanying drawings, wherein:

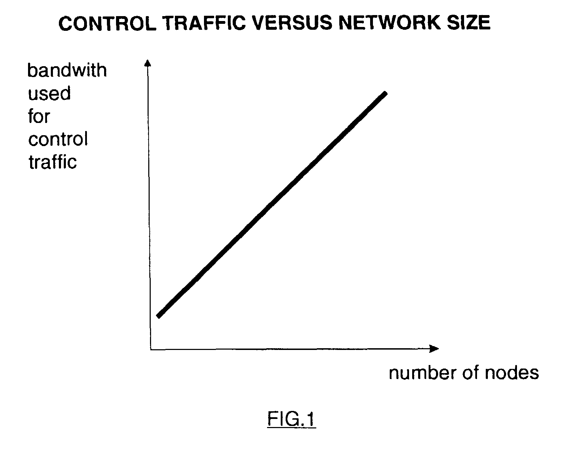

- Figure 1 shows the bandwidth used by the control traffic in function of the number of nodes within the network.
- Figure 2 shows a typical speed packet switching network.
- Figure 3 describes a high speed routing point.
- Figure 4 shows two users establishing a communication over a packet switching network.
- Figure 5 describes the Topology DataBase structure.
- Figure 6 shows the distribution of the topology in a network comprising a backbone subnetwork connected to a plurality of access subnetworks according to the present invention.
- Figure 7 shows the Directory Services Proxies according to the present invention.
- Figure 8 is a flow chart of the broadcasting mechanism according to the present invention.
- Figure 9 is a flow chart of the procedure called when the Directory Services Proxy located in the access network receives a request message according to the present invention.
- Figure 10 is a flow chart of the procedure called when the Directory Services Proxy in the backbone network receives a request message according to the present invention.
- Figure 11 is a flow chart of process for initializing the link bridge and the associated Directory Services Proxies according to the present invention.

### Preferred embodiment of the invention

### I PRIOR ART

### HIGH SPEED COMMUNICATIONS

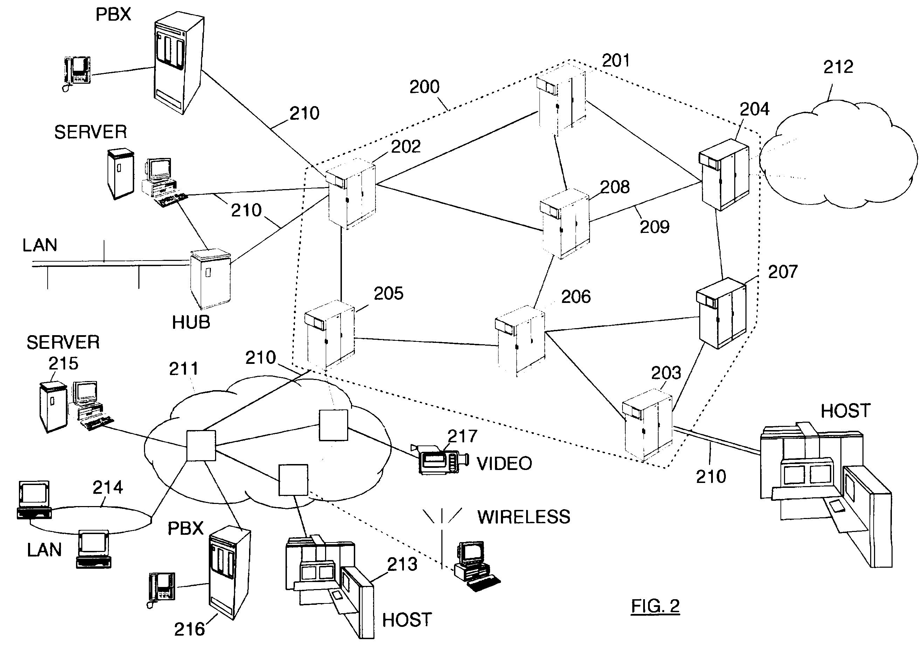

As illustrated in Figure 2, a typical model of communication system is made of several user networks (212) communicating through a high performance network (200) using private lines, carrier provided services, or public data networks. Each user network can be described as a set of communication processors and links (211) interconnecting large computers used as enterprise servers (213), user groups using workstations or personal computers attached on LAN (Local Area Networks 214), applications servers (215), PBX (Private Branch eXchange 216) or video servers (217). These user networks, spread in different establishments, need to be interconnected through wide area transport facilities and different approaches can be used for organizing the data transfer. Some architectures involve the checking for data integrity at each network node, thus slowing down the transmission. Others are essentially looking for a high speed data transfer. To that end the transmission, routing and switching techniques within the nodes are optimized to process the flowing packets toward their final destination at the highest possible rate. The present invention belongs essentially to the latter category and more particularly to the fast packet switching network architecture detailed in the following paragraphs.

### High Performance Packet Switching Networks

The general view in Figure 2 shows a fast packet switching transmission system comprising eight nodes (201 to 208) each node being interconnected by means of high speed communication lines called Trunks (209). The access (210) to the high speed network by the users is realized through Access Nodes (202 to 205) located at the periphery. These Access Nodes comprise one or more Ports, each one providing an access point for attaching external devices supporting standard interfaces to the network and performing the conversions required to transport the users data flow across the network from and to other external devices. As example, the Access Node (202) interfaces respectively a Private Branch eXchange (PBX), an application server and a hub through three Ports and communicates through the network by means of the adjacent Transit Nodes (201), (205) and (208).

### Switching Nodes

Each network node (201 to 208) includes a Routing Point where the incoming data packets are selectively routed on the outgoing Trunks towards the neighbouring Transit Nodes. Such routing decisions are made according to the information contained in the header of the data packets. In addition to the basic packet routing function, the network nodes provide ancillary services such as:
- the determination of routing paths for packets originated in the node,
- directory services like retrieving and updating information about network users and resources,
- the maintaining of a consistent view of the physical network topology, including link utilization information, and
- the reservation of resources at access points of the network.

These ancillary services include:
- the storage within the node of alternate paths,
- the updating of these paths.

Each Port is connected to a plurality of user processing equipment, each user equipment comprising either a source of digital data to be transmitted to another user system, or a data sink for consuming digital data received from another user system, or, typically, both. The interpretation of the users protocols, the translation of the users data into packets formatted appropriately for their transmission on the packet network (200) and the generation of a header to route these packets are executed by an Access Agent running in the Port. This header is made of Control, Routing and Redundancy Check Fields.
- The Routing Fields contain all the information necessary to route the packet through the network (200) to the destination node to which it is addressed. These fields can take several formats depending on the routing mode specified (connection oriented or connectionless routing mode...).
- The Control Fields include, among other things, an encoded identification of the protocol to be used for interpreting the Routing Fields.
- The Redundancy Check Fields are used to check for errors in the header itself. If an error is detected, the packet is discarded.

### Routing Points

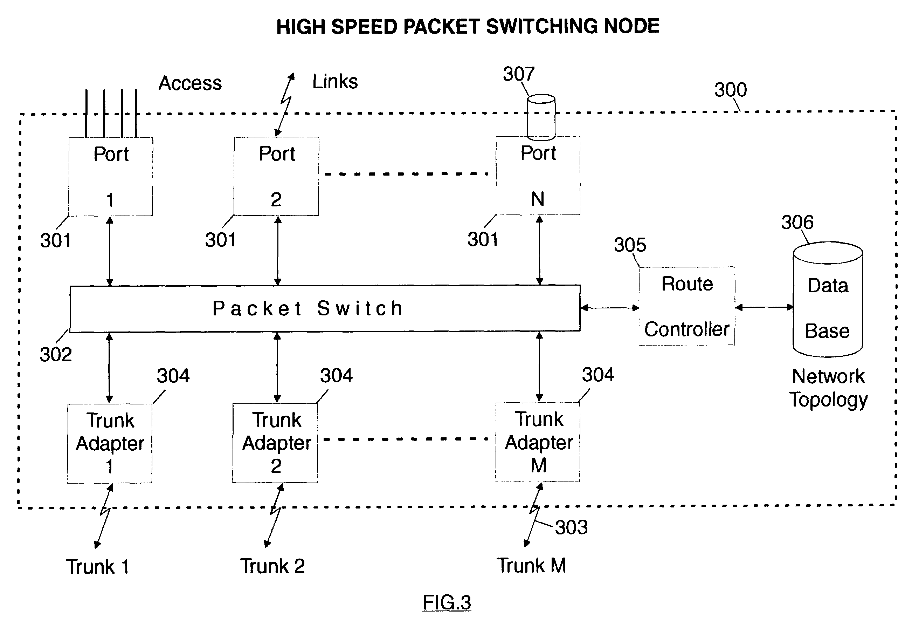

Figure 3 shows a general block diagram of a typical Routing Point (300) such as it can be found in the network nodes (201 to 208) illustrated in Figure 2. A Routing Point comprises a high speed packet Switch (302) onto which packets arriving at the Routing Point are entered. Such packets are received:
- from other nodes over high speed transmission links (303) via Trunk Adapters (304).
- from users via application adapters called Ports (301).

Using information in the packet header, the adapters (304, 301) determine which packets are to be routed by means of the Switch (302) towards a local user network (307) or towards a transmission link (303) leaving the node. The adapters (301 and 304) include queuing circuits for queuing packets prior to or subsequent to their launch on the Switch (302).

The Route Controller (305) calculates the optimum paths through the network (200) so as to satisfy a given set of quality-of-services specified by the user and to minimize the amount of network resources used to complete the communication path. Then, it builds the header of the packets generated in the Routing Point. The optimization criterion includes the number of intermediates nodes, the characteristics of the connection request, the capabilities and the utilisation of the links (Trunks) in the path, the number of intermediate nodes... The optimum route is stored in a Routing Database (308) for further reuse.

All the information necessary for the routing, about the nodes and transmission links connected to the nodes, are contained in a Network Topology Database (306). Under steady state condition, every Routing Point has the same view of the network. The network topology information is updated when new links are activated, new nodes added to the network, when links or nodes are dropped or when link loads change significantly. Such information is exchanged by means of control messages with all other Route Controllers to provide the up-to-date topological information needed for path selection (such database updates are carried on packets very similar to the data packets exchanged between end users of the network). The fact that the network topology is kept current in every node through continuous updates allows dynamic network reconfigurations without disrupting end users logical connections (sessions).

The incoming transmission links to the packet Routing Point may comprise links from external devices in the local user networks (210) or links (Trunks) from adjacent network nodes (209). In any case, the Routing Point operates in the same manner to receive each data packet and forward it on to another Routing Point is dictated by the information in the packet header. The fast packet switching network operates to enable a communication between any two end user applications without dedicating any transmission or node facilities to that communication path except for the duration of a single packet. In this way, the utilisation of the communication facilities of the packet network is optimized to carry significantly more traffic than would be possible with dedicated transmission links for each communication path.

### NETWORK MANAGEMENT

### Network Control Functions

The Network Control Functions are those that control, allocate, and manage the resources of the physical network. Each Routing Point has a set of the foregoing functions in the Route Controller (305) and uses it to facilitate the establishment and the maintenance of the connections between users applications. The Network Control Functions include in particular:
- Directory Services
   - for retrieving and maintaining information about network users and resources.
- **Bandwidth Management**
   - for processing the bandwidth reservation and maintenance messages, and
   - for monitoring the current reservation levels on links.
- **Path Selection**
   - for choosing the best path for each new connection considering the connection requirements and the current link utilisation levels.
- **Control Spanning Tree**
   - for establishing and maintaining a routing tree among the network nodes,
   - for using it to distribute control information (in parallel) including link utilisation, and
   - for updating the Topology Database of the nodes with new network configurations or link/node failures.
- **Topology Update**
   - for distributing and maintaining, using the Spanning Tree, information about the logical and physical network (including link utilization information) in every node.
- **Congestion Control**
   - for enforcing the bandwidth reservation agreements between the network's users and the network which are established at the call set up time, and
   - for estimating actual bandwidth and for adjusting reservation if necessary during the life of the connection.

### TOPOLOGY DATABASE (TDB)

The Topology Database contains information about nodes, links, their properties, and the bandwidth allocation. The topology information is replicated in each node of the network. An algorithm guarantees the correctness of each node's Topology Database when links and nodes are added or deleted or when their characteristics change. The database comprises:
- the physical topology of the network which includes static information like physical characteristics of nodes and links,
- the state of nodes and links, and
- the link utilisation which includes dynamic characteristics like current bandwidth (used and reserved), real-time measurements...

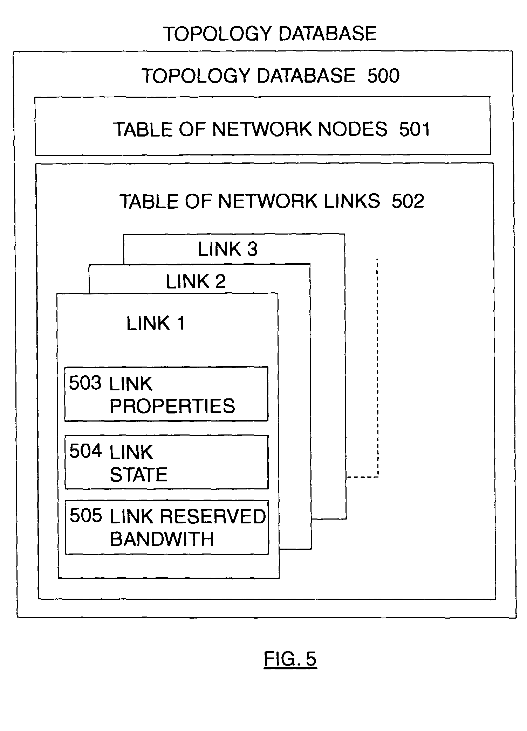

The general organisation of the Topology Database is shown in Figure 5. To each resource in the network, nodes (501) or links (502), is associated an entry in the database. In particular, each link entry includes the following characteristics:
- (503) **the link physical properties :**
   - transmission medium and speed,
   - routing mode supported,
   - maximum packet size,
   - link buffer capacity,
   - propagation delay,
   - bandwidth reservation supported...
- (504) **the link state :**
   - on-line (link can accept user connections),
   - quiescent (link cannot accept additional user
   - connections, but existing connections continue),
   - off-line (link cannot accept user connections and existing connections are cancelled)...
- (505) **the link utilization** :
   - real-time measurements,
   - reserved bandwidth,...

The Topology maintenance consists of advertizing and gathering the updates that occur inside the network. Changes can be of three types :
- The first type deals with link physical properties : additional link, link removal, reconfiguration ...
- The second type deals with link state.
- The third type deals with dynamic link utization.

The concept of distributed topology assumes that each Control Point has the same view of the network.

### DIRECTORY SERVICES

The Directory Services are responsible for locating users in the network. Users are connected to external networks, which attach into the network via access agents located in access nodes. The Directory Services function is distributed around all the directory agents which reside in access agents. They are used on behalf of users when network connections are being established.

### Users of the Network

A user is identified uniquely by its "resource name", which describes the user in its native protocol. The access agent in the access node communicates with users using their native protocols and names, but uses the particular network protocols and names when communicating with other network nodes. Directory Services is responsible for the mapping of a resource name into a particular network name. The user's resource name is specified using the following three value :
- *Resource Identifier Type* : this describes the addressing scheme used for this user (E.164, X.121, NSAP, ...).
- *Resource Identifier* : this identifies a user within the syntax of the network described by the resource identifier type.
- *Resource Identifier Prefix* : The prefix is used to group together users of the same resource identifier type. The prefix is optional and used when directory services implements directory sets.

### Directory Database

Directory services uses a distributed directory database. Each directory agent maintains its own local directory database which contains information about users of the network. A local directory database has records for a subset of all the users of the network. Combining all the local directory databases from the directory agents would give a complete view of the distributed directory database. This is different from the Topology Services with its fully replicated Topology Database that gives every node a complete view of the network's topology. A local directory database agent is managed by each directory agent. A node will have multiple local directory database if there are multiple access agent on the node. From a view point of directory services on a node, there are two sorts of users:
- *Local user* : local users are those which gain access to the network through this directory agent.
- *Remote users* : remote users are those which gain access to the network through a different directory agent.

The directory database contains a number of directory entries. An entry is present for each local user. There are also entries for some of the remote users. The information which is kept in a directory entry includes among other parameters :
- resource identifier and prefix;
- resource identifier type;
- network addresses of the resource's access agent components (directory agent, protocol agent, connection agent);
- etc ..

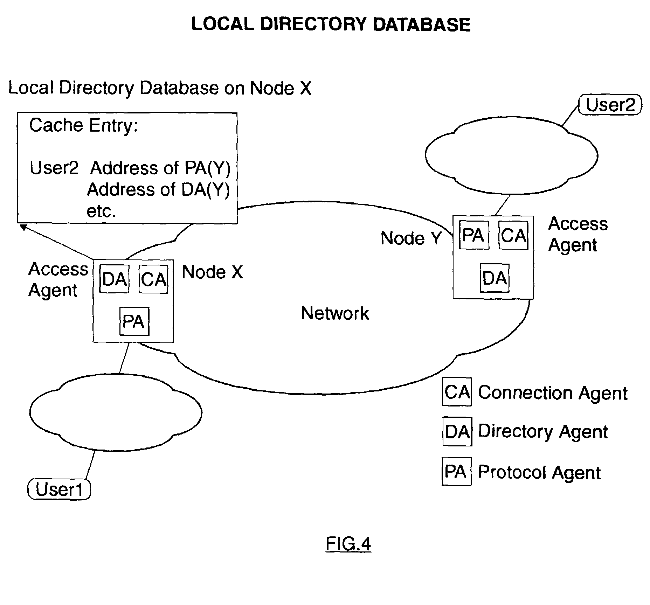

Figure 4 shows two users who are establishing a communication in a network. It is assumed that User 1 (who is connected to node X), is setting up communication with User 2 (connected to node Y). Directory services on node X happens to have a cache entry for User 2 as a result of a previous query. However, just knowing the external name (the resource name) is not enough to calculate a path across the network. The information about the access agent addresses is required because this is how a remote user is located and his network connection established.

Information in the local directory database can come from different sources :
- *Home entry* : entries for local or remote users are generated in the local node using configuration information provided by the customer.
- *Registered entry* : information about local users can be provided using signalling as a result of an external search.
- *Cached entry* : remote users are located as a result of distributed queries (searches), and the information cached.

### Distributed Queries

Directory services always inspects the local directory database for a target user.
- If the target user is a local user, then a distributed query is not required.
- If a directory agent needs to inspect another part of the distributed directory database, a distributed query is used in order to locate a target user.

The distributed queries are so called because it is a search which is distributed among a group of remote directory agents. Distributed queries are sent from an origin directory agent to one or more destination directory agents, using either a directory set (a directory set is a group of directory agents which support users with the same longest matching address prefix) or the spanning tree.

### Undirected Explicit Queries

This type of query is used if the local directory database doe not contain any information about the user to be located. The origin directory agent multicasts the query to the appropriate directory group using a default distribution tree (a default distribution tree is a tree which spans all the members of a particular directory set). A remote directory agent will only reply to this type of query if it provides access to the destination user. A positive reply means that the destination user is a local member of the directory database of the destination directory agent. When a directory agent replies positively to a query, it will provide the location of the target user, in terms of the addresses of its access agent components.

### II PRESENT INVENTION

### NETWORK STRUCTURE

The network according to the present invention, is partitioned into two types of subnetworks. The topology distribution is effective at the subnetwork level only.
- Access subnetworks have a limited number of nodes and links. These nodes are basically used for accessing the network as source nodes or destination nodes.
- The backbone subnetwork is unique and generally comprises a higher number of nodes and links than access subnetworks. The backbone subnetwork is mostly used for transmitting traffic from an access subnetwork to another although this is not a restriction.

Consequently, nodes are not functionally specialized even if they belong to different types of subnetwork. Access subnetworks may have direct links in between but an access subnetwork should not be used for transmitting traffic from an access node to another. An access subnetwork and the backbone subnetwork may be connected by several links.
- A node that belongs to an access subnetwork and that is directly connected to the backbone subnetwork is called "access border node".
- A node that belongs to the backbone subnetwork and that is directly connected to an access subnetwork is called "backbone border node".
- A link between border nodes of different subnetworks is called "border link'.

Figure 6 shows a typical network comprising a backbone subnetwork interconnected to a plurality of access subnetworks (access subnetworks 1, 2, 3) :
- Nodes A, B, C .. M are interconnected with transmission links.
- The backbone subnetwork comprises nodes D, E, F, G.
- Access subnetwork 1 is built of nodes A, B, C. Access subnetwork 2 is built of nodes I, J, H. Access subnetwork 3 is built of nodes K, L, M.
- Nodes B, C, K, L, H, I are access border nodes. Nodes D, E, F, G are backbone border nodes.
- Links C-E, B-D, K-D, L-G, I-G, H-F, L-I are border links.

A node is identified by means of a subnetwork identifier and a node identifier, this node identifier is unique within the subnetwork the node belongs to. A specific identifier is used to identify the backbone subnetwork. In each subnetwork (access or backbone) the associated topology content is shown in a TDB pattern.

### TOPOLOGY DATABASE (TDB)

Each node within a same subnetwork has the same view of the subnetwork topology. The information contained in the Topology DataBase (TDB) is limited to the subnetwork level and to adjacent border nodes : there is no systematic replication between subnetworks. As described previously, entries in the Topology DataBase are of two types : node or link. There is one node entry for each subnetwork node (nodes A, B, C) and each adjacent border node (nodes E, D). There is one link entry for each unidirectional link. Each unidirectional link being attached to its origin node, the subnetwork Topology DataBase (TDB) contains all the unidirectional links attached to the subnetwork nodes. This includes the unidirectional border links of the subnetwork border nodes (C ->E, B->D).
As shown in Figure 6, the different Topology DataBases (TOB) are exclusive. However, they partially share each other the knowledge of the backbone subnetwork or the knowledge of the adjacent access subnetworks (adjacent border nodes and border links). For instance, the Topology DataBase of access subnetwork 1 comprises all the nodes (A, B, C) located within this subnetwork, the corresponding outgoing unidirectional links (A -> B, A -> C, B -> A, B -> C, B -> D, C ->A, C -> B, C -> E) and the backbone border nodes (D, E). Unidirectional border links (B -> D, C -> E) of access border nodes (B, C) are included.

In the present invention, local subnetwork Topology DataBases are neither duplicated nor concatenated. They are used locally :
- for implementing:
   - in each access subnetwork, an access subnetwork Directory Services Proxy in an access border node and
   - in the backbone subnetwork, a backbone subnetwork Directory Services Proxy in backbone border nodes.
- for defining a unique link bridge for each access subnetwork.

### DIRECTORY SERVICES

The locating of network resources is necessary in order to set up a network connection between a source and a destination. As detailed previously, a resource is uniquely identified by a resource name which usually follows an addressing scheme, E164, NSAP for example. It is assumed that the addressing scheme is structured so that, in most case, a prefix can be extracted and the relation to a given subnetwork be assigned. In small networks, the resource search can be simply an undirected query message broadcasted to every node. On the contrary, in large network it is not possible to broadcast every query message without overloading the network. The network partitioning into access subnetworks and backbone subnetwork gives the opportunity to improve the efficiency of the broadcasting mechanism while remaining unchanged the existing search mechanism in nodes.

### Link Bridge

Several links may interconnect an access subnetwork and the backbone subnetwork. In order to avoid duplication of undirected searches outside the originating subnetwork, a unique link is selected to become a "link bridge" between two border nodes of different types: access subnetwork border node and backbone subnetwork border node. There is a single link bridge per access subnetwork.

### Directory Services Proxies

In border nodes (access border node and backbone border node) of each subnetwork bridge link, a Directory Services Proxy is implemented :
- The purpose of an access subnetwork Directory Services Proxy is to determine whether an undirected query message relates to a resource that is local to the subnetwork or a resource that belongs to another subnetwork. The undirected query message is either discarded or forwarded accordingly.
- The purpose of a backbone subnetwork Directory Services Proxy is to determine whether a query message relates to a resource that belongs to a subnetwork it manages or not.

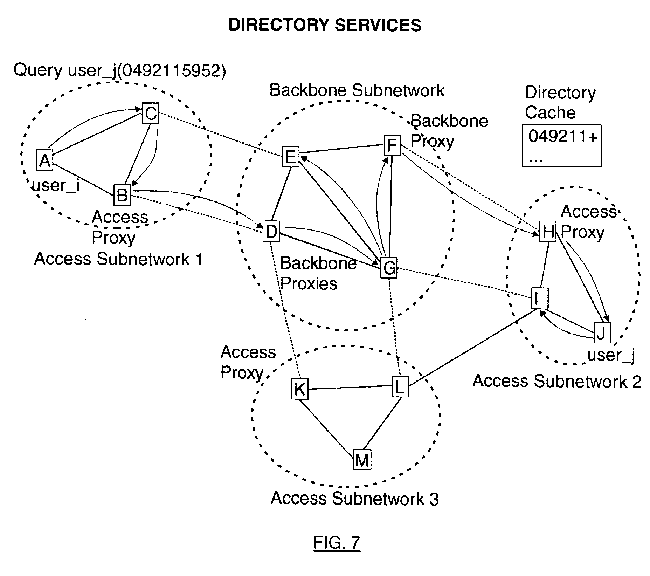

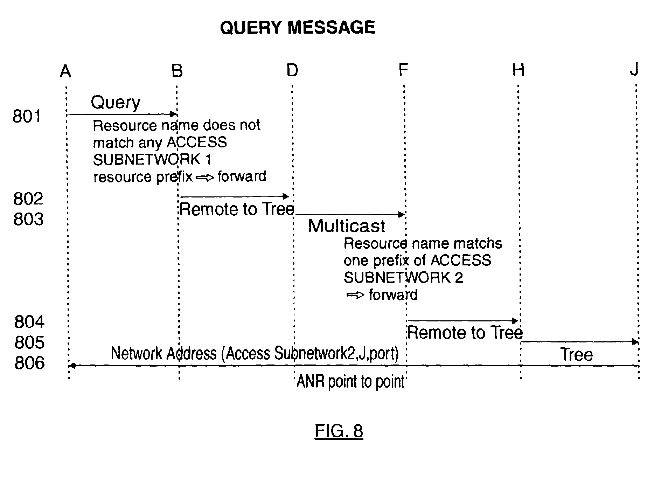

Figures 7 and 8 are showing an undirected query issued from an access subnetwork:

### Broadcasting Mechanism

- **801 :** Source node A - A query message with a resource name (or address) is sent by the Directory Services of source node A preferably using the services of the source subnetwork spanning tree.
- **802** : Border node B - This query message is intercepted and read by the Directory Services Proxy located in access border node B. This Directory Services Proxy determines whether this query message relates to a local resource or not. Query message with a non local resource name (resource name - "0492115952" for instance - that doesn't match any access subnetwork 1 resource identifier prefix in the directory database of node B) are forwarded to the backbone subnetwork. Query messages with a local resource name are forwarded along the subnetwork spanning tree.
   *Note* : in a preferred embodiment, query messages are forwarded to the backbone subnetwork in Remote Access to Label-Swap Tree transfer mode which is a combination of the ANR (Automatic Network Routing) and label swapping transfer modes. The remote access to label-swap tree transfer mode uses ANR to transfer a packet for the first part of its journey and then uses label swapping for the remainder of the journey. The remote access to Label-Swap tree is used because packets may be replicated at some transit nodes and each replicated packet sent to a different destination with a different label.
- **803** : Backbone border node D - Node D has its own directory database but has also access to the directory database of the access subnetwork Directory Services Proxies of the access subnetworks it manages. At reception of the query message, node D determines whether it is targeted to an access subnetwork it manages (access subnetwork 3) or not. Because in our example, node D does not recognize in the query message a resource identifier prefix that corresponds to the access subnetwork it manages, it forwards the query message to the next node (node G) on the backbone subnetwork spanning tree. Node G forward in its turn the query message to node F.
- **804** : Node F - Node F recognizes that the resource name corresponds to an access subnetwork that it manages (the address "049211+" matches the resource identifier prefix of access subnetwork 2). It forwards the query message to this access subnetwork via the link bridge (F->H).
- **805** : Node H - The access border node H multicasts on the subnetwork spanning tree the query message within the access subnetwork 2.
- **806** : Node J - Node J receives the multicasted query message as any node in the access subnetwork 2, recognizes the ownership of the resource and prepares a response. This response is sent directly to the requester (node A) thanks to the Reverse Path Accumulation function.

*Note* : The Reverse Path Accumulation function enables the path that a packet has traversed through the network to be recorded in the header of the packet. This can then be used by the recipient of the packet to efficiently construct a reply packet.

### Proxy in Access Subnetworks

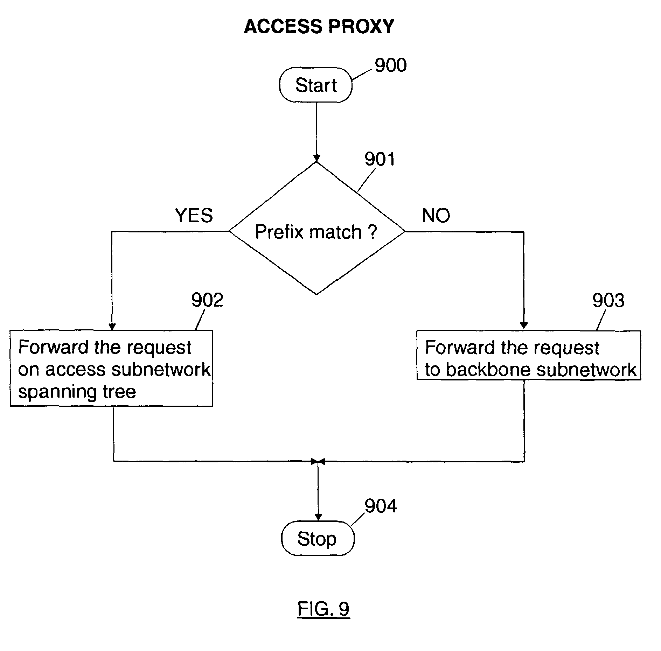

Figure 9 shows the procedure that is called when a Directory Services Proxy in an access subnetwork receives a query message :
- **900** : the procedure is triggered at reception of a request message.
- **901** : a test determines whether or not the resource name of the target resource matches a proxy directory database entry (resource identifier prefix stored in the directory database of the access border node).
   - If the resource name matches an entry of the proxy directory database (a resource identifier prefix), the procedure goes on with step (902)
   - If the resource name does not match any entry of the proxy directory database (a resource identifier prefix), the procedure goes on with step (903)
- **902** : the resource name of the target has been found, therefore the request is forwarded to the next node on the access subnetwork spanning tree and the procedure terminates on step (904).
- **903** : the resource name of the target has not been found, therefore the request is forwarded on the link bridge to the Directory Services Proxy located in the border node of the backbone subnetwork. The procedure terminates on step **904**.

### Proxy in Backbone Subnetwork

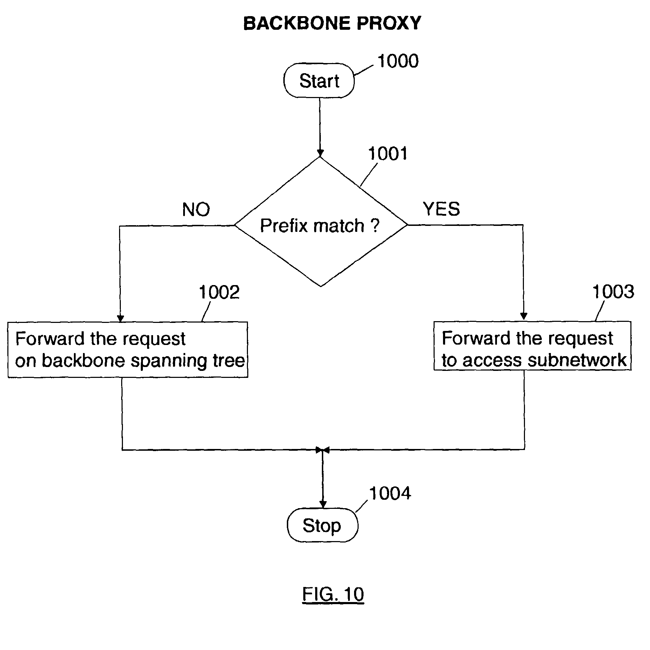

Figure 10 shows the procedure that is called when a Directory Services Proxy in a backbone subnetwork receives a query message :
- **1000** : the procedure is triggered at reception of a request message.
- **1001** : a test determines whether or not the resource name of the target resource matches a proxy directory database entry (resource identifier prefix stored in the directory database of the backbone border node).
   - If the resource name matches an entry in the proxy directory database (resource identifier prefix), the procedure goes on with step (1003)
   - If the resource name does not match any entry in the proxy directory database (a resource identifier prefix), the procedure goes on with step (1002)
- **1002** : the resource name of the target has not been found, therefore the request is forwarded to the next node on the backbone subnetwork spanning tree and the procedure terminates on step (1004).
- **1003** : the resource name of the target has been found, therefore the request is forwarded on the link bridge to the Directory Services Proxy located in the border node of the access subnetwork. The procedure terminates on step (1004).

### Link bridge

The selection of a link bridge between a backbone and an access border node is the responsibility of the access subnetwork. A simple criterion based on the access subnetwork topology allows the selection of a unique link bridge since the Topology DataBase is the same for each node within a given access subnetworks. The node at the origin of the link candidate for being the link bridge calls an initialization procedure for setting up the Directory Services Proxies in both access and backbone border nodes.

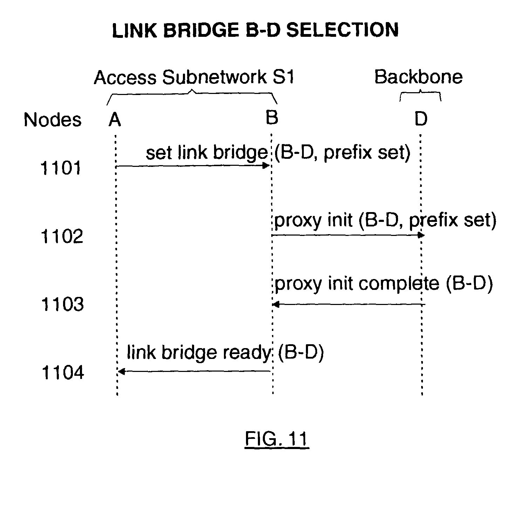

The Figure 11 shows the selection process of a link bridge between nodes B and D and the initialization of the corresponding Directory Services Proxies (access and backbone proxies).
- **1101 :** Node (A) having the responsibility for selecting a link bridge sends a message to all subnetwork nodes informing them that link B-D has been selected. At reception of this message, all subnetwork nodes send to node (B) at the origin of that link the set of the resource identifier prefixes they manage.
- **1102** : Node (B) initializes the access subnetwork Directory Services Proxy with the resource identifier prefixes of all subnetwork nodes and adds its own prefixes. Then, it sends to the backbone border node (D) a request with all the resource identifier prefixes known in the access subnetwork for initializing the backbone subnetwork Directory Services Proxy.
- **1103 :** Node (D) initializes the backbone subnetwork Directory Services Proxy and stores the received resource identifier prefixes. Then, it sends a reply to the access node (B).
- **1104 :** Node (B) returns an acknowledgement to node (A) to confirm the link bridge set-up.

The backbone side is passive but keeps a liveness with the access side to confirm the backbone proxy existence on behalf of this access subnetwork. Any topology change inside the access subnetwork can invalidate the link bridge and restart another initialization process.

### Spanning Tree

The network is no more managed by a single spanning tree but by as many spanning trees as subnetworks (access subnetworks plus backbone subnetwork). Each subnetwork maintains its own spanning tree independently. The advantage is obviously the flexibility, the fast response time plus the capacity to rearrange a subnetwork without impacting the whole network. The spanning tree algorithm checks the subnetwork identifier of every node that can be reached and limit the set-up to those pertaining to the same access network. To provide a complete connectivity to Directory Services Proxies, a link (bridge link) is selected automatically between each access subnetwork and the backbone network. The access subnetwork is responsible of selecting this link. The border nodes on the selected link automatically activate the Directory Services Proxy functions.

While the invention has been particularly shown and described with reference to a preferred embodiment, it will be understood that various changes in form and detail may be made therein without departing from the spirit, and scope of the invention.

## Claims

1. A method in an access border node of locating a network resource in a packet switching network divided in a backbone subnetwork connected to one or a plurality of access subnetworks, said network comprising a plurality of nodes interconnected with transmission links, said access subnetworks comprising one or a plurality of access border nodes directly connected to the backbone subnetwork, said backbone subnetwork comprising one or a plurality of backbone border nodes directly connected to the access subnetworks, border nodes of different subnetworks being connected by border links, said method involving the steps of:
• receiving (900) a query message comprising a resource name, said resource name including a prefix;
• comparing (901) said resource name prefix with the prefixes stored in an access border node directory database, said access border node directory database comprising prefixes of the resources local to the access border node subnetwork;
• determining (901) whether the resource name relates to a resource which is local to the access border node subnetwork or not;
• forwarding (903) said query message to an adjacent backbone border node when said resource name relates to a resource which is not local to the access border node subnetwork.

2. The method according to the preceding claim, comprising the further step of :
• multicasting (902) said query message within the access border node subnetwork when said resource name relates to a resource local to said access border node subnetwork.

3. The method according to the preceding claim wherein step of multicasting said query message comprises the step of forwarding said query message along a local spanning tree defined within the access border node subnetwork.

4. The method according to any one of the preceding claims comprising the step of:
• receiving (1101) from other nodes in the access border node subnetwork, the prefixes of the resources they manage;
• adding the prefixes of the resources the access border node manage locally;
• initializing (1102) the access border node directory database with the prefixes of the resources local to the access border node subnetwork.

5. The method according to the preceding claim comprising the further step of:
• forwarding (1102) to the adjacent backbone border node a copy of the access border node directory database.

6. A method in a backbone border node of locating a network resource in a packet switching network divided in a backbone subnetwork connected to one or a plurality of access subnetworks, said network comprising a plurality of nodes interconnected with transmission links, said access subnetworks comprising one or a plurality of access border nodes directly connected to the backbone subnetwork, said backbone subnetwork comprising one or a plurality of backbone border nodes directly connected to the access subnetworks, border nodes of different subnetworks being connected by border links, said method involving the steps of :
• receiving (1000) a query message comprising a resource name, said resource name including a prefix;
• comparing (1001) said resource name prefix with the prefixes stored in one or a plurality of backbone border node directory databases, each backbone border node directory database corresponding to an access subnetwork managed by the backbone border node;
• determining (1001) whether the resource name relates to a resource which belongs to an access subnetwork that the backbone border node manages or not;
• forwarding (1003) said query message to an adjacent access border node when said resource name relates to a resource which belongs to an access border node subnetwork managed by the backbone border.

7. The method according to the preceding claim comprising the further step of :
• multicasting ((1002) said query message within the backbone subnetwork when said resource name relates to a resource which does not belong to any of the access border node subnetworks managed by the backbone border node.

8. The method according to the preceding claim wherein said step of multicasting said query message comprises the step of forwarding said query message along a local spanning tree defined within the backbone subnetwork.

9. The method according to any one of claims 6 to 8 comprising the further steps of:
• receiving from each subnetwork managed by the backbone border node, a access border node directory database.
• initializing (1103) the backbone border node directory databases with the received access border node directory databases.

10. The method according to any one of the preceding wherein within each access subnetwork, there is one and only one access border node with an access border node directory database connected to a backbone subnetwork. border node comprising one or a plurality of backbone border node directory databases.

11. The method according to any one of the preceding claims wherein each node has access to a topology of the subnetwork it belongs to.

12. The method according to any one of the preceding claims wherein the topology of each subnetwork comprises information concerning the subnetwork nodes and subnetwork links and information concerning the adjacent border nodes and border links.

13. The method according to any one of the preceding claims wherein said access subnetworks may have direct links in between but an access subnetwork should not be used for transmitting traffic from an access node to another.

14. An access border node for carrying out the method according to any one of claims 1 to 5 and 10 to 13.

15. A backbone border node for carrying out the method according to any one of claims 6 to 13.

16. A network comprising nodes according ot any one of claims 14 to 15.
